# EUROPEAN PATENT SPECIFICATION

(11) **EP 3 789 197 B1**
(45) Date of publication and mention of the grant of the patent: **27.07.2022**
(21) Application number: 20194325.5
(22) Date of filing: 03.09.2020
(51) Int. Cl.: B32B 41/00, B32B 38/18

(54) **APPARATUS FOR APPLYING A PROTECTIVE LAYER**
VORRICHTUNG ZUM AUFBRINGEN EINER SCHUTZSCHICHT
APPAREIL D'APPLICATION D'UNE COUCHE DE PROTECTION

(30) Priority: 05.09.2019 SE 1951014
(43) Date of publication of application: 10.03.2021
(73) Proprietor: Fashiontekk AB, 692 33 Kumla (SE)
(72) Inventor: GERRBO, Olivia, 413 02 Göteborg (SE); SVENSSON, Elin, 432 97 Rolfstorp (SE)
(74) Representative: Westpatent AB

(56) References cited:
- CN-A- 108 748 967
- KR-A- 20180 025 415
- US-A1- 2013 287 987
- US-B2- 9 884 474

## Description

### TECHNICAL FIELD

The disclosure relates to an apparatus for applying a protective layer on the surface of a device, said apparatus being configured for accommodating the device and comprising a pressure unit configured to be displaced along said surface while applying pressure on said protective layer.

### BACKGROUND

In today's society, it is very common with personal mobile devices such as mobile telephones, tablet computers and similar devices. Such devices are portable and convenient to use for communication purposes. However, mobile devices are often used in situations and in environments where there is a substantial risk for wear and damage to such devices. In particular, a mobile phone has a display with a screen which is relatively fragile and which is highly sensitive to scratches, physical impact and other potential sources of damage.

For this reason, it is today common to reinforce the display surface of a mobile device with a special protective layer, normally in the form of a protective film which is transparent and which can be applied to said surface. In this manner, the surface of the display is protected to a certain extent from damage such as cracks, scratches and excessive mechanical forces. Also, certain types of protective films are manufactured with certain optical properties, for example polarization, which is an additional advantage with a protective film.

It is known that a protective film can be applied manually onto the display surface of a mobile phone by a user. However, a process for applying the protective film can be challenging since the protective film can be difficult to align properly on the surface of the mobile phone. Also, there is a risk that air bubbles and contaminations such as dust or small objects are trapped between the surface of the mobile phone and the underside of the protective film. This is obviously a disadvantage.

For this reason, it is previously known to use a particular type of applicator machine to apply a protective film in a more uniform, accurate and efficient manner than described above. More precisely, it is previously known to use a device with a fixture in which the mobile device is held steadily. A protective film is then positioned above the mobile device, and a mechanism for aligning and applying the protective film on the screen is subsequently initiated. In this manner, the protective film can be attached to the screen surface of the mobile device in an improved manner.

The patent documents DE 20 2018 106635, KR 10-1853589 and US 2015/0314523 are examples of documents which disclose devices in which a mobile device such as a mobile telephone can be accommodated and in which a protective film can be applied on the surface of the display of said mobile device.

Even though the arrangements disclosed in the above-mentioned documents can be used for attaching a protective film on a mobile device in an adequate manner, there is a need for further improvements within this field of technology. In particular, there is an increasing requirement to provide such processes for applying a protective film which are easy to use, which provides precise alignment of the protective before mounting thereof on the mobile device, and which also is configured for minimizing the risk for contaminants to become trapped between the protective film and the surface of the mobile device.

CN 108 748 967 A discloses a further apparatus comprising a fixing base and a bracket member movably connected to the fixing base and including a separating portion. There is a need for further improvements within the above-mentioned field of technology.

### SUMMARY

In accordance with the disclosure, there is provided an apparatus for applying a protective layer on the surface of a device, such as for example a mobile device, said apparatus having a purpose of providing the above-mentioned requirements and advantages. In particular, the apparatus according to the disclosure is configured in a manner so as to solve the above-mentioned problems related to prior art within this field.

In accordance with the disclosure, this object is obtained by means of an apparatus for applying a protective layer on the surface of a device, said apparatus being configured for accommodating the device and comprising a pressure unit configured to be displaced along said surface while applying pressure on said protective layer. Furthermore, the pressure unit is configured to be displaced in a direction from a first end portion to a second end portion of said device when said protective layer is mounted in a manner so that its rests on a support tab positioned at said second end portion of said device, and wherein said support tab is removed when said pressure unit approaches said second end portion of the device and comes into contact with a sliding device which forms part of said apparatus and comprises said support tab and which is configured to be displaced in a direction along the longitudinal extension of the device.

According to the disclosure, an advantage is provided through the fact that the apparatus allows a process of applying a protective layer on a device in a simple and efficient manner. The protective layer can furthermore be applied in a manner in which air bubbles can be removed and different types of particles and contaminants can be eliminated so that they do not become trapped between the protective layer and the surface of the device in question.

According to an embodiment, the sliding device may be is configured to be positioned at least partly covering said second end portion of the mobile device before the pressure unit is operated, wherein said sliding device is configured to be forced towards a position in which said support tab is removed when the pressure unit comes into contact with said sliding device.

According to an embodiment said sliding device is forced to be displaced in a direction away from said second end portion as a result of movement of the pressure unit after it has reached a position in which it is in contact with the sliding device, so that the support tab no longer supports the edge of the protective film and the protective film is pressed into contact with the surface of said device.

According to an embodiment, the sliding device may be is configured to be displaced along a support tray which is configured for accommodating said mobile device. According to an embodiment, the support tray may comprise a locking element which is configured for releasably locking the sliding device in a stand-by position in which it does not cover said second end portion.

According to an embodiment, the support tray may comprise spring elements which are configured for biasing said sliding device in a direction towards said second end portion.

According to an embodiment, the apparatus may comprise a container which can be closed with a lid and wherein the pressure unit comprises an operating handle which is positioned outside the closed container whereas said squeegee is positioned inside the closed container.

According to an embodiment, the container may comprise an air fan for forcing air towards the mobile device while said protective layer is applied.

According to an embodiment, the container may comprise an air filter cooperating with said air fan.

According to an embodiment, the device may be constituted by a mobile device. Said mobile device may be a mobile telephone, a tablet computer or a similar unit.

According to an embodiment, said surface may be constituted by a screen of a display forming part of a mobile device.

Further advantages and advantageous features of the disclosure are disclosed in the following description and in the dependent claims.

### BRIEF DESCRIPTION OF THE FIGURES

The disclosure will be described in greater detail below with reference to the figures shown in the appended drawings.
- Figure 1: shows a perspective view of an apparatus for applying a protective film according to the disclosure;
- Figure 2: shows a perspective view corresponding to Figure 1 but with a lid being shown in an open condition;
- Figure 3: shows a perspective view of a support tray in accordance with an embodiment of the disclosure;
- Figure 4A: shows a perspective view of the apparatus for applying a protective film;
- Figure 4B: corresponds to Figure 4A but shows a side view of the apparatus in question;
- Figure 4C: corresponds to Figure 4B but shows the apparatus in a further operational condition;
- Figure 5: shows a perspective view of a pressure unit according to an embodiment of the disclosure;
- Figure 6: shows the pressure unit according to Figure 5 but as regarded from another angle;
- Figure 7: shows the pressure unit in an exploded view;
- Figure 8A: shows the support tray according to Figure 3, in an assembled condition;
- Figure 8B: corresponds to Figure 8A but shows the support tray and additionally the pressure unit;
- Figure 9: shows a lower portion of the support tray in an enlarged form; and
- Figure 10: shows an underside of the support tray which is shown in Figures 3, 8 and 9.

### DETAILED DESCRIPTION

Different aspects of the present disclosure will be described more fully hereinafter with reference to the enclosed drawings. The disclosure can be realized in many different forms and should not be construed as being limited to the embodiments below.

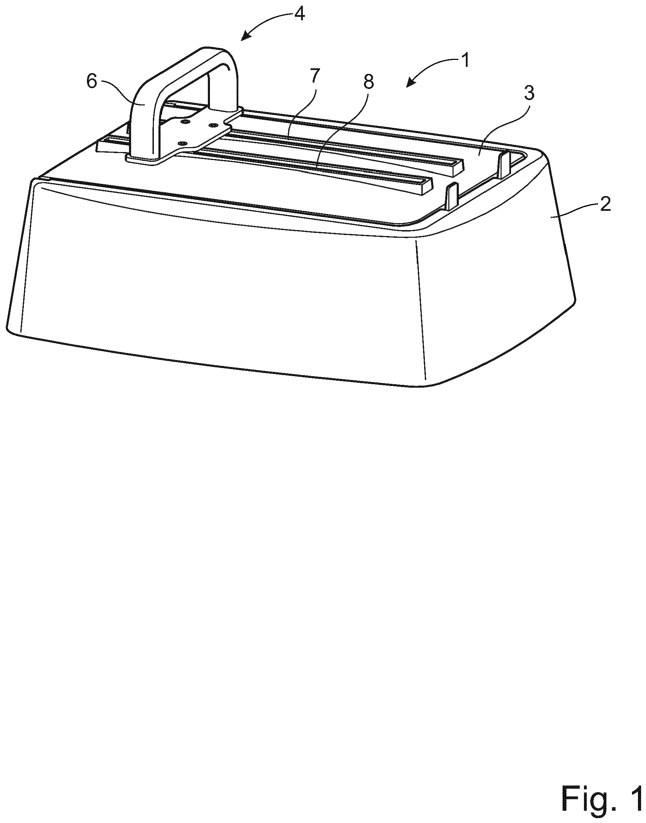

With initial reference to Figure 1, there is shown a perspective view of an apparatus 1 according to the disclosure which according to an embodiment is configured for applying a protective layer on the surface of the display of a device such as a mobile device, for example a telephone, a tablet computer or similar device. The apparatus 1 is not limited to any particular type of protective layer or any particular type of mobile device.

For example, the protective layer can be in the form of a relatively thin film of a glass or plastics material which serves as a reinforcement of a screen or other surface of the device in question. According to an embodiment, the protective layer is consequently an overlay layer serving as screen or display protection and must be fitted closely to the dimensions of the surface to which it is attached. Also, the protective layer may have optical properties, for example in the form of polarization.

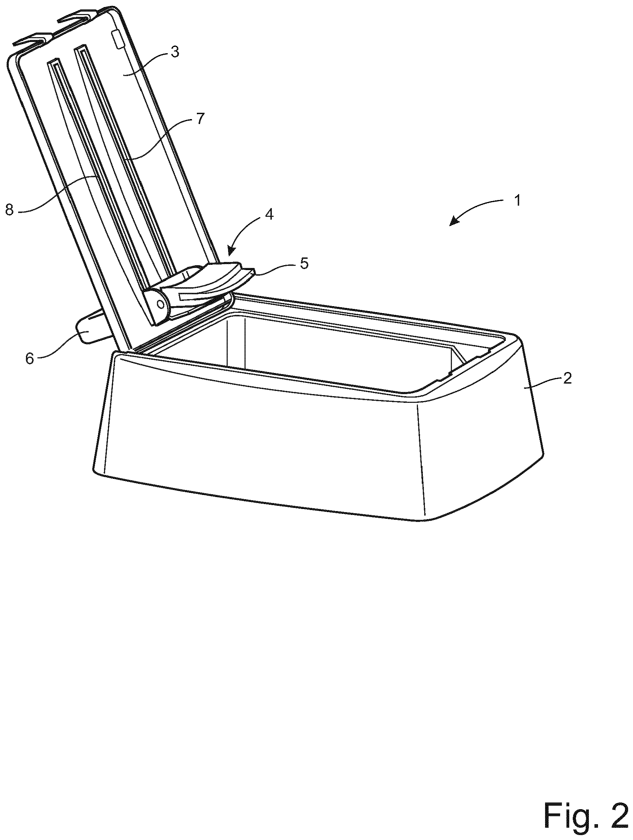

The apparatus 1 comprises a generally box-shaped container 2 which comprises a lid 3 which is pivotally arranged by means of a hinge structure (not shown). Figure 1 shows the apparatus 1 in a condition in which the lid 3 is closed, whereas Figure 2 shows the same apparatus 1 but in a condition in which the lid 3 open. The condition with an open lid 3 occurs when a user wishes to start using the apparatus 1 to apply a protective layer, such as a relatively thin protective film, on the surface, such as a screen of the mobile device. The mobile device and the protective film are then positioned inside the container 2 as will be described below. The lid 3 is then closed.

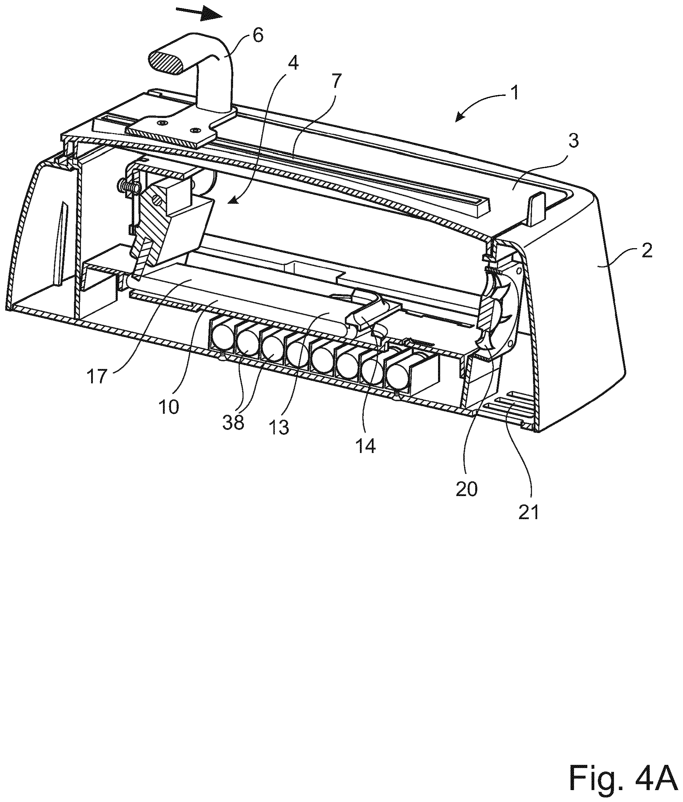

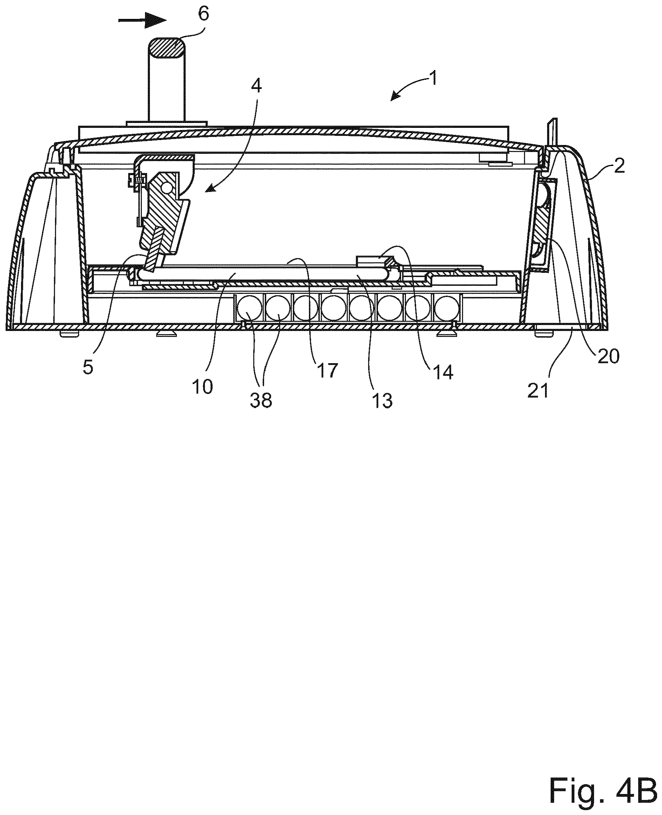

Furthermore, a pressure unit 4 is arranged so that it is accessible from the outside of the apparatus 1 and so that it extends through the lid 3. This pressure unit 4 is configured for being in contact with a protective film which is to be applied to the mobile device. This is not shown in Figure 1 and Figure 2 but will be described in greater detail below with reference to Figure 4A and Figure 4B.

As shown in particular in Figure 2, the pressure unit 4 comprises a squeegee 5, suitably in the form of a generally resilient and flat blade of rubber or any similar material, which is configured for being displaced along the display surface of the mobile device and for applying pressure to a protective film which is positioned so as to be applied on the display surface. The pressure unit 4 is also based on the use of a handle 6 which can be moved manually by a user in order to displace the squeegee 5 along the display surface of the mobile device. To this end, the lid 3 is provided with two guide tracks 7, 8 along which the pressure unit 4 can be displaced. In this manner, the movement of the pressure unit 4 can be controlled. This will also be described in greater detail below.

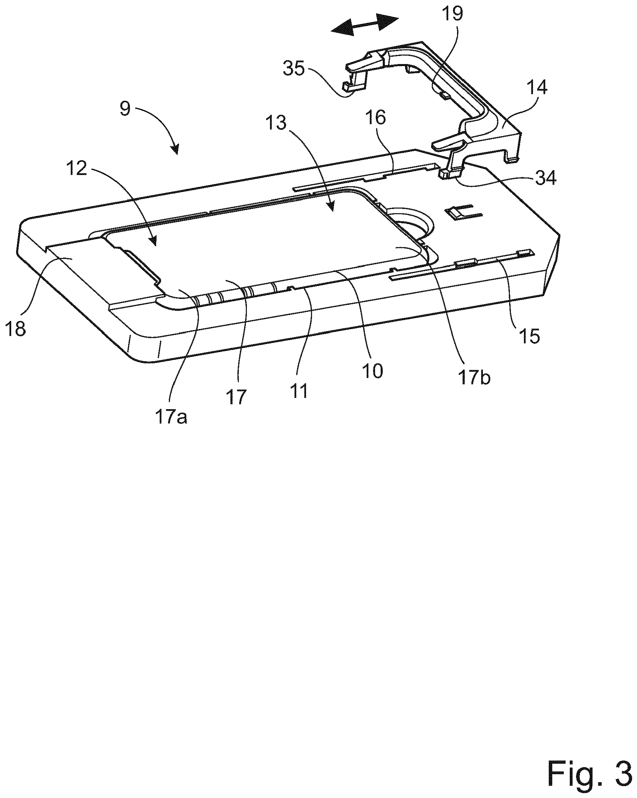

With reference to Figure 3, there is shown a support tray 9 which is configured for being mounted in the bottom of the container 2 shown in Figure 1 and 2. More precisely, the support tray 9 is shaped so as to accommodate a mobile device, for example in the form of a mobile phone 10 as shown in Figure 3. The support tray 9 has dimensions which is adapted to those of the mobile phone 10 and is in particular shaped with a recess 11 which is adapted to the dimensions of the mobile phone 10. In this manner, the mobile phone 10 can be placed in the recess 11 when a protective film is to be mounted on the display surface of the mobile phone 10.

In order to describe the operation of the apparatus 1 according to the disclosure, it should be noted that the mobile phone 10 can be said to comprise an upper portion 12, i.e. a first end portion, and a lower portion 13, i.e. a second end portion. As shown in Figure 3, the support tray 9 carries a sliding device 14 which is positioned close to the second end portion 13 of the mobile phone 10 and which is displaceable along the surface of the support tray 9 as shown with an arrow in Figure 3. To this end, the sliding device 14 is arranged in two support tray tracks 15, 16 so as to control its displacement.

Initially, i.e. before a mobile phone 10 is positioned in the recess 11, the sliding device 14 is positioned so that it does not cover any part of the recess 11. This corresponds to a position to the far right in the drawing of Figure 3. Next, after the mobile phone 10 has been mounted in the recess 11 (with the intention of applying a protective 17 film upon the display surface of the mobile phone 10), the sliding device 14 is displaced to the left so that it at least partly covers the second end portion 13 of the mobile phone 10.

The next step is that the protective film 17 is positioned on top of the mobile phone 10. To simplify this process, the support tray 9 is proved with a guide device 18 at the first end portion 12 of the mobile phone 10. Also, although not described in detail, the recess 11 is suitably formed with means for alignment of the protective film 17 in the transversal direction of the support tray 9.

It should be noted that Figure 3 shows the sliding device 14 separated from the support tray 9, for reasons of clarity. In reality, the sliding device 14 is positioned on top of the surface of the support tray 9, with two guide elements 35, 36 extending down into the support tray tracks 15, 16.

The protective film 17, having a first end portion 17a and a second end portion 17b, is suitably positioned in a manner so that its second end portion 17b rests upon a support tab 19 which is part of the sliding device 14. In other words, the support tab 19 is initially positioned between the upper surface of the mobile phone 10 and the underside of the protective film 17. The purpose with this arrangement is to ensure that the second end portion 17a of the protective film 17 is positioned above the surface of the mobile phone 10 before the sliding device 4 (see Figure 1 and 2) is displaced along the entire surface of the mobile phone 10. This will be described in greater detail below.

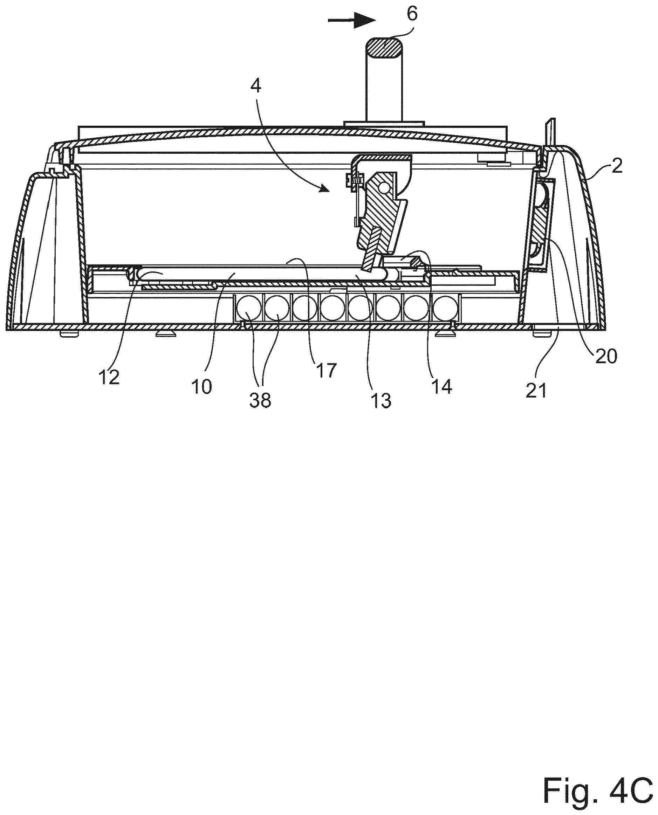

With reference to Figure 4A, 4B and 4C - showing the entire apparatus 1 for applying a protective layer 17 in a perspective view and in a side view, respectively - there is furthermore shown the apparatus 1 in an operational condition when the mobile phone 10 is mounted in the support tray 9 and the sliding device 14 is positioned partly over the second end portion 13 of the mobile phone 10. At this stage, the pressure unit 4 can be manually displaced along the guide tracks 7, 8 by means of the handle 6, i.e. towards the right as shown by means of an arrow in Figure 4A and Figure 4B. During the displacement of the pressure unit 4, the squeegee 5 will exert a certain pressure upon the protective film 17 which is positioned on top of the display surface of the mobile phone 10. In this manner, the protective film 17 can be fastened to said display surface.

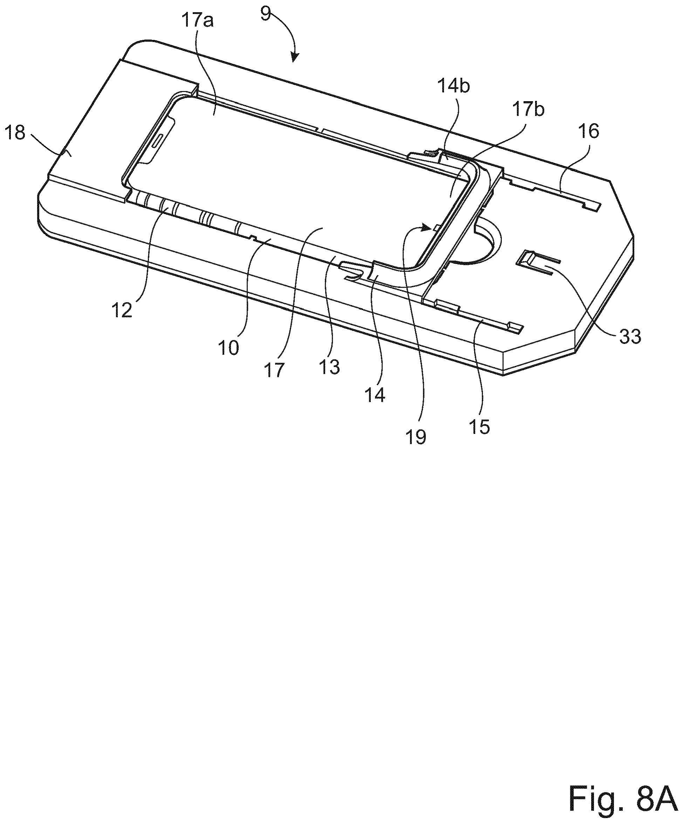

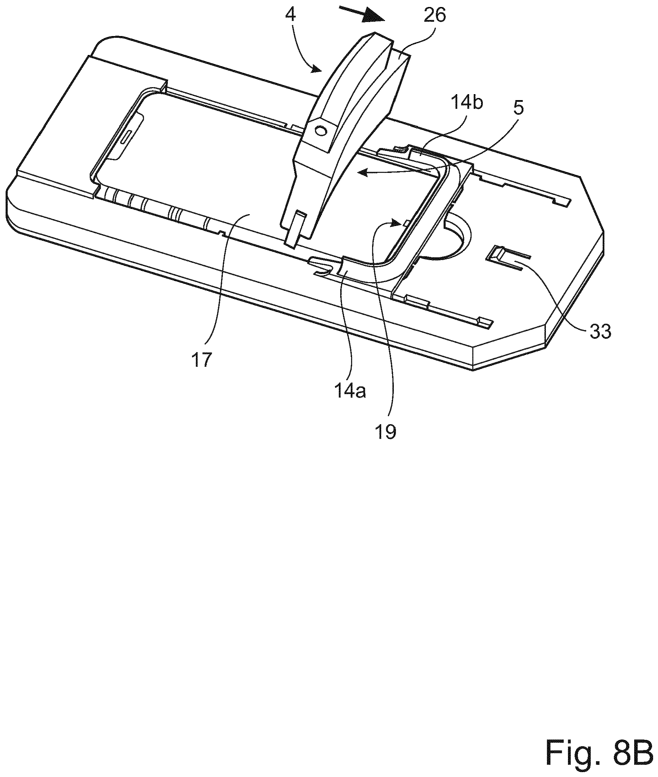

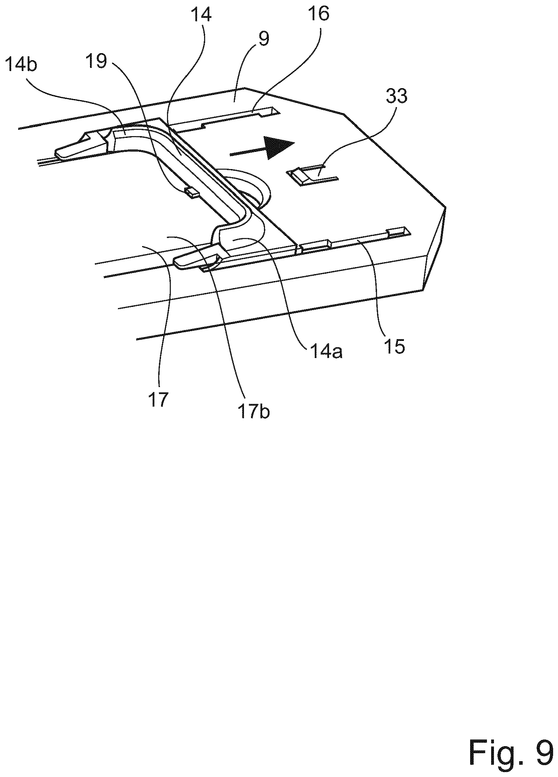

At this stage - i.e. as the pressure unit 4 is being displaced along the surface of the mobile phone 10 - the second end portion 17b of the protective film 17 rests upon the support tab 19. The support tab 19 is not clearly visible in Figure 4A but will be described below with reference to Figure 8 and Figure 9 (and is also shown in Figure 3). This means that displacement of the pressure unit 4 (towards the right in Figure 4A) gradually forces the protective film 17 into contact with the display surface of the mobile phone 10 while air bubbles between the display surface and the underside of the protective film 17 are eliminated.

According to the embodiment shown, the pressure unit 4 will finally reach a position in which it comes into contact with the sliding device 14. This is shown in Figure 4C. At this point, the sliding device 14 will be forced to be displaced in a direction away from the second end portion 13 of the mobile phone 10 as a result of this movement of the pressure unit 4. In other words, the sliding device 14 will be forced (to the right in Figure 4A) so that the support tab 19 no longer supports the edge of the protective film 17. This means that the entire underside of the protective fim 17 can now be pressed into contact with the display surface of the mobile phone 10. The protective film 17 is consequently completely attached to the mobile phone 10.

In summary, the present disclosure generally relates to a apparatus 1 for applying a protective layer 17 on the surface of a device such as for example a mobile device 10. As described above, the apparatus 1 comprises a support tray 9 for accommodating the mobile device 10 and a pressure unit 4 which is configured to be displaced in a direction along said surface of the mobile device 10 while pressure is applied on the protective layer 17.

In particular, the pressure unit 4 is arranged so as to be displaced in a direction from a first end portion 12 to a second end portion 13 of said mobile phone 10 after the protective film 17 has been mounted in a manner so that its rests on a support tab 19 which is positioned at said lower portion 13 of the mobile device 10. At this initial stage, the support tab 19 is positioned between the surface of the mobile device 10 and the underside of the protective film 17. Subsequently, the support tab 19 will be removed when the pressure unit 4 reaches the second end portion 13 of the mobile device 10. This is shown in Figure 4C. This means that the entire protective film 17 will then be in contact with the surface of the mobile device.

As shown for example in Figure 3, the support tab 19 forms part of the sliding device 14 which is configured to be displaced in a direction along the longitudinal extension of the mobile phone 10. Also, according to the embodiment shown in particular in Figure 4C, the entire sliding device 14 will be forced away from the second end portion 13 of the mobile phone 10 as the pressure unit 4 is moved into contact with the sliding device 14.

It is shown in the embodiments according to Figure 4A and 4B that the sliding device 14 is configured to be positioned at least partly covering said second end portion 13 of the mobile device 10 before the pressure unit 4 is operated, and also that the sliding device 14 is configured to be forced to a position in which it does not cover the second end portion 13 of the mobile device 10 (Figure 4C) when the pressure unit 4 comes into contact with said sliding device 14.

According to an embodiment, as shown in Figures 4A-4C, the container 2 accommodates an air fan 20 for forcing air towards the position where the protective film 17 is located. Also, in order to allow an inflow of air into the container 2, an air inlet 21 is provided in the bottom of the container 2. Additionally, it is suitable to arrange an air filter in connection with the air fan 20. This means that the protective film 17 can be applied while dust and other contaminations are removed by air which is forced into the container 2 by means of the air fan 20.

According to an embodiment, the air fan 20 is electric. In order to provide power to the air fan 20, there is provided a set of batteries 38 located in the container 2.

According to a further embodiment, the apparatus 1 is designed as a generally closed container 2 which can be closed with the lid 3 while the pressure unit 4 can be manually operated by means of the handle 6. As shown for example in Figure 1, the handle 6 is positioned outside the closed container 2 whereas the squeegee 5 of the pressure unit 4 is positioned inside the closed container 2. This contributes to an improved process in which the protective film 17 can be applied in an environment which is closed and generally free from dust and other contaminations.

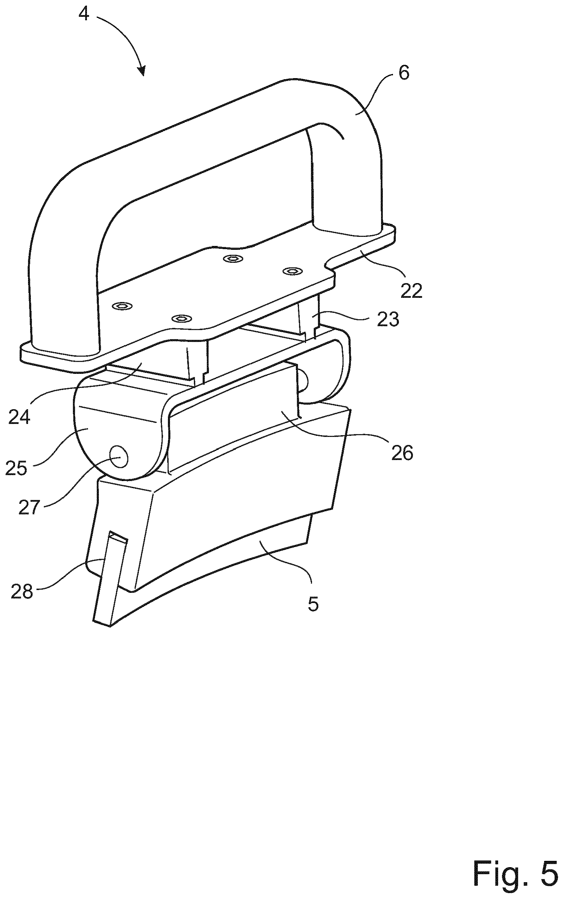

Furthermore, as shown in Figure 5, the pressure unit 4 comprises a handle 6 which is positioned on a support plate 22. Two sliding blocks 23, 24 are furthermore attached on the underside of the support plate 22. The sliding blocks 23, 24 are configured to slide within the above-mentioned guide tracks 7, 8 in the lid 3. Also, the sliding blocks 23, 24 are attached to a bracket 25 which in turn is connected to a squeegee holder 26. In particular, the squeegee holder 26 is pivotably arranged in the bracket 25 via a shaft 27. Also, as shown in Figure 5, the squeegee 5 is mounted in a recess 28 which is arranged along the width of the squeegee holder 26.

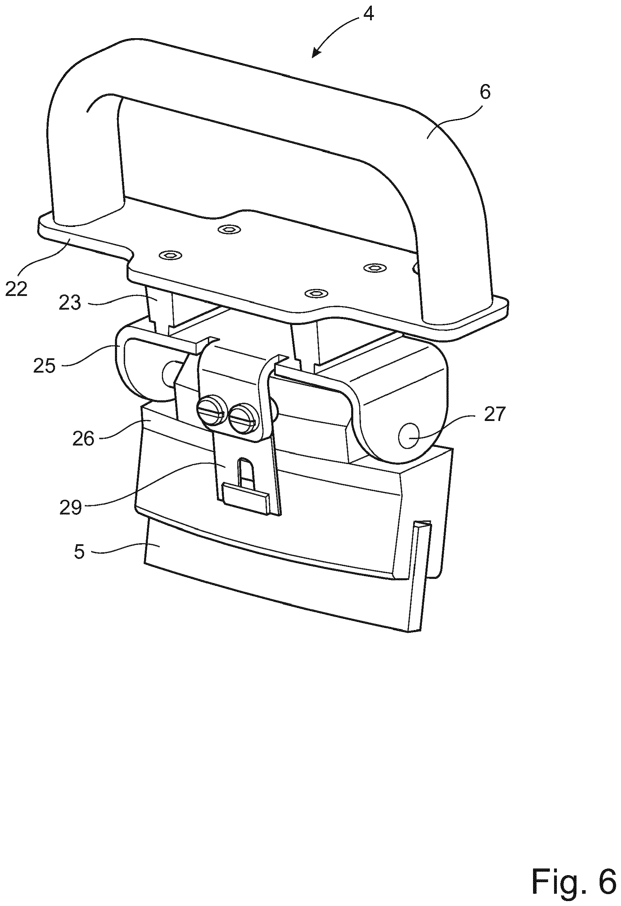

Figure 6 shows a perspective view from the reverse side of the pressure unit 4, as compared with Figure 5. It should be particularly noted that the pressure unit 4 comprises a spring element 29 which is mounted on the bracket 25. The purpose of the spring element 29 is to exert a force upon the squeegee holder 26, so that the squeegee 5 in turn may act upon the display surface of the mobile phone 10 in a suitable manner and with an optimized pressure.

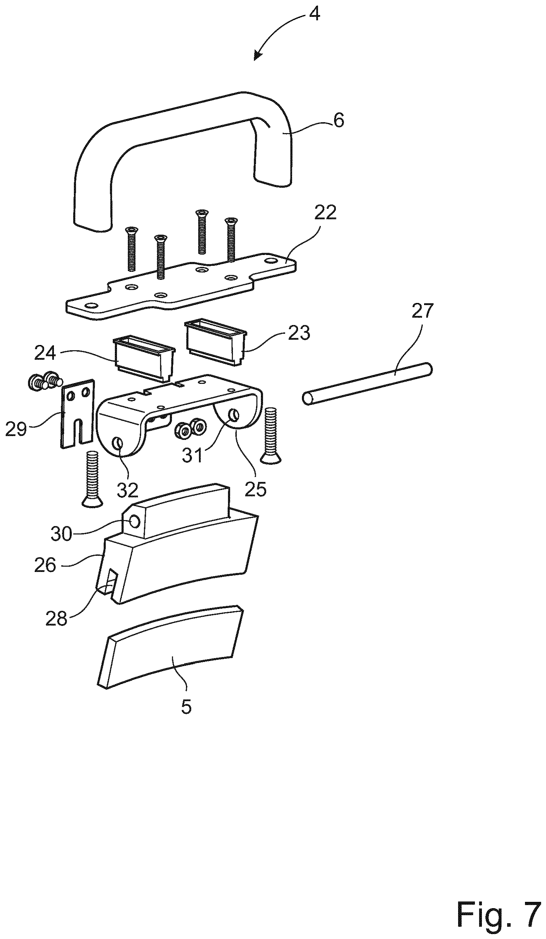

Figure 7 shows the pressure unit 4 in an exploded view, indicating how the various parts of the pressure unit 4 are joined. In particular, there is shown how the shaft 27 extends through a hole 30 in the squeegee holder 26, and also through holes 31, 32 in the bracket 25, so as to obtain a pivoting movement of the squeegee holder 26 and consequently also the squeegee 5 itself.

A particular advantage with the pressure unit 4 is that it allows a process of applying a protective layer on the surface of a mobile device in which the squeegee 5 can be displaced within a closed container 2 while the handle 6 for operating the pressure unit 4 is positioned outside the container 2. This minimizes the amount of dust and other contaminations which otherwise may exist and get trapped between the protective film and the surface of the mobile device.

Figure 8A and Figure 8B show the support tray 9 in which a mobile phone 10 is positioned so as to apply a protective film 17 on the upper surface of the mobile phone 10. In particular, the second end portion 17b of the protective film 17 rests upon the support tab 19. Also, the support tray 9 carries the sliding device 14, which is generally U-shaped with its ends formed as two arms 14a, 14b extending from the second end portion 13 and towards the first end portion 12 of the mobile phone 10. The sliding device 14 is configured so as to be displaced along the two support tray tracks 15, 16.

In particular, Figure 8B shows in a simplified form how the pressure unit 4 with its squeegee 5 can be displaced in a direction towards the sliding device 14, as described above and as indicated with an arrow in Figure 8. In particular, Figure 8 shows the squeegee 5 in a condition in which it comes into contact with the end sections of the two arms 14a, 14b, which forces the sliding device 14 to be displaced in a direction towards the right in Figure 8. The movement of the pressure unit 4, during which the pressure unit 4 is in contact with the sliding device 14, forces the sliding device 14 away from its initial position in which the support tab 19 supports the protective film 17 at the second end portion 13. This movement of the sliding device 14 will cause the support tab 19 to move away from contact with the underside of the protective film 17, which in turn causes the entire protective film 17 to be attached to the upper surface of the mobile phone 10.

Figure 9 shows a further perspective view of a part of the support tray 9 and the sliding device 14. In particular, the end sections of each arm 14a, 14b of the sliding device 14 are shown. Also, Figure 9 shows the support tray tracks 15, 16 along which the sliding device 14 can be displaced. When the sliding device 14 is pushed and consequently moved by the squeegee 5 (as indicated by means of an arrow in Figure 9) it will be moved so that the protective film 17 no longer rests upon the support 19 and so that the entire protective film is attached to the mobile device.

As the sliding device 14 moves further, it will finally reach a position in which it will be locked by means of a locking element 33 which is formed in the support tray 9. The position and design of the locking element 33 is configured so as to lock the sliding device 14 in a stand-by position after the protective film 17 has been attached to the mobile phone 10 and before a new mobile phone is positioned in the support tray 9. When this occurs, the sliding device 14 will be released from the locking element 33 so as to allow displacement of the sliding device 14 towards the above-mentioned position in which it partly overlaps the second end portion 13 of the mobile device 10 and in which it is ready for applying a new protective film 17. More precisely, the locking element 33 is configured as a raised portion, i.e. a "roof-shaped" element, which is formed in the top surface of the support tray 9. The locking element 33 can also be slightly resilient. When the sliding device 14 is displaced and forced over the locking element 33, the friction between the underside of the sliding device 14 and the locking element 33 will increase until the sliding device 14 is locked. Also, the sliding device 14 can be unlocked by manually forcing it in a direction away from the locking element 33 (i.e. to the left in Figure 9 and opposite to the direction of the arrow).

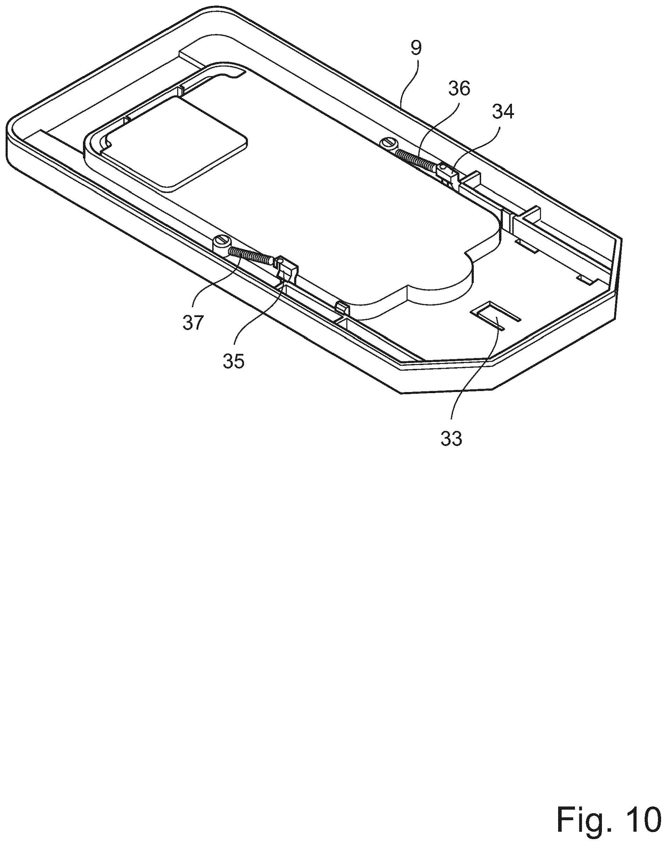

Figure 10 shows the support tray 9 as regarded towards its underside, i.e. turned upside-down. In particular, there is shown the two displaceable guide elements 34, 35, positioned on each side of the support tray 9. The guide elements 34, 35 form part of each arm 14a, 14b of the sliding element 12. This is also shown in Figure 3. More precisely, the guide elements 34, 35 are positioned in the support tray tracks 15, 16 and are also spring-biased by means of two corresponding spring elements 36, 37. The purpose of this arrangement is to force the sliding device 14 in a direction towards the position in which it partly overlaps the second end portion 13 of the mobile device 10 when the locking element 33 (see Figure 9) is released.

The invention is not limited to the embodiments described above but can be varied within the scope of the appended claims. For example, the device according to the disclosure is not limited to any particular mobile device. In fact, the device can be used with any form of device in which there is a need to cover a display surface with a protective film.

In case that the device is used for mobile phones or similar devices, it should be noted that the support tray 9 can be adapted to accommodate generally any type of mobile device, tablet computer or similar piece of equipment.

In particular it should be noted that the principles of the apparatus 1 have been described with regard to a device with a flat screen. It should be noted that the apparatus is also suitable for devices having a non-flat, i.e. curved screen, which is common for example in mobile phones.

## Claims

1. An apparatus (1) for applying a protective layer (17) on the surface of a device (10), said apparatus (1) being configured for accommodating the device (10) and comprising a pressure unit (4) configured to be displaced along said surface while applying pressure on said protective layer (17), wherein the pressure unit (4) is configured to be displaced in a direction from a first end portion (12) to a second end portion (13) of said device (10) when said protective layer (17) is mounted in a manner so that its rests on a support tab (19) positioned at said second end portion (13) of said device (10), and wherein said support tab (19) is removed when said pressure unit (4) approaches said second end portion (13) of the device (10) and comes into contact with a sliding device (14) which forms part of said apparatus (1) and comprises said support tab (19) and which is configured to be displaced in a direction along the longitudinal extension of the device (10).

2. An apparatus (1) according to claim 1, wherein said sliding device (14) is configured to be positioned at least partly covering said second end portion (13) of the device before the pressure unit (4) is operated, and wherein said sliding device (14) is configured to be forced towards a position in which said support tab (19) is removed when the pressure unit (4) comes into contact with said sliding device (14).

3. An apparatus (1) according to claim 1 or 2, wherein said sliding device (14) is forced to be displaced in a direction away from said second end portion (13) as a result of movement of the pressure unit (4) after it has reached a position in which it is in contact with the sliding device (14), so that the support tab (19) no longer supports the edge of the protective film (17) and the protective film (17) is pressed into contact with the surface of said device (10).

4. An apparatus (1) according to any one of claims 1-3, wherein said sliding device (14) is configured to be displaced along a support tray (9) which is configured for accommodating said device (10).

5. An apparatus (1) according to claim 4, wherein said support tray (9) comprises a locking element (33) which is configured for releasably locking the sliding device (14) in a stand-by position in which it does not cover said second end portion (13).

6. An apparatus (1) according to claim 4 or 5, wherein said support tray (9) comprises spring elements (36, 37) which are configured for biasing said sliding device (14) in a direction towards said second end portion (13).

7. An apparatus (1) according to any one of the preceding claims, wherein the apparatus (1) comprises a container (2) which can be closed with a lid (3) and wherein the pressure unit (4) comprises an operating handle (6) which is positioned outside the closed container (2) and a squeegee (5) which is positioned inside the closed container (2).

8. An apparatus (1) according to claim 7, wherein the container (2) comprises an air fan (20) for forcing air towards the device (10) while said protective layer (17) is applied.

9. An apparatus (1) according to claim 8, wherein the container (2) comprises an air filter cooperating with said air fan (20).

10. An apparatus (1) according to any one of the preceding claims, wherein said device (10) is constituted by a mobile device (10).

11. An apparatus (1) according to claim 10, wherein said mobile device (10) is a mobile telephone, a tablet computer or a similar unit.

12. An apparatus (1) according to claim 10 or 11, wherein said surface is constituted by a screen of a display forming part of said mobile device (10).

## Patentansprüche

1. Vorrichtung (1) zum Aufbringen einer Schutzschicht (17) auf der Oberfläche einer Vorrichtung (10), wobei die Vorrichtung (1) zum Aufnehmen der Vorrichtung (10) und umfassend eine Druckeinheit (4) konfiguriert ist, um entlang der Oberfläche verschoben zu werden, während Druck auf die Schutzschicht (17) ausgeübt wird, wobei die Druckeinheit (4) konfiguriert ist, um in einer Richtung von einem ersten Endabschnitt (12) an einen zweiten Endabschnitt (13) der Vorrichtung (10) verschoben zu werden, wenn die Schutzschicht (17) so montiert ist, dass ihre Auflage auf einer Stützlasche (19) ruht, die am zweiten Endabschnitt (13) der Vorrichtung (10) positioniert ist, und wobei die Stützlasche (19) entfernt wird, wenn die Druckeinheit (4) sich dem zweiten Endabschnitt (13) der Vorrichtung (10) annähert und mit einer Schiebevorrichtung (14) in Kontakt kommt, welche Teil der Vorrichtung (1) ist und die Stützlasche (19) umfasst und die konfiguriert ist, um in einer Richtung entlang der Längserstreckung der Vorrichtung (10) verschoben zu werden.

2. Vorrichtung (1) nach Anspruch 1, wobei die Schiebevorrichtung (14) konfiguriert ist, um so positioniert zu sein, dass sie den zweiten Endabschnitt (13) der Vorrichtung mindestens teilweise abdeckt, bevor die Druckeinheit (4) betrieben wird, und wobei die Schiebevorrichtung (14) konfiguriert ist, um in Richtung einer Position gedrückt zu werden, in der die Stützlasche (19) entfernt wird, wenn die Druckeinheit (4) in Kontakt mit der Schiebevorrichtung (14) kommt.

3. Vorrichtung (1) nach Anspruch 1 oder 2, wobei die Schiebevorrichtung (14) infolge einer Bewegung der Druckeinheit (4), nachdem sie eine Position erreicht hat, in der sie mit der Schiebevorrichtung (14) in Kontakt steht, in eine Richtung weg von dem zweiten Endabschnitt (13) gedrückt wird, so dass die Stützlasche (19) die Kante der Schutzfolie (17) nicht mehr stützt und die Schutzfolie (17) in Kontakt mit der Oberfläche der Vorrichtung (10) gedrückt wird.

4. Vorrichtung (1) nach einem der Ansprüche 1 bis 3, wobei die Schiebevorrichtung (14) konfiguriert ist, um entlang einer Stützschale (9) verschoben zu werden, die zum Aufnehmen der Vorrichtung (10) konfiguriert ist.

5. Vorrichtung (1) nach Anspruch 4, wobei die Stützschale (9) ein Verriegelungselement (33) umfasst, das zum lösbaren Verriegeln der Schiebevorrichtung (14) in einer Stand-by-Position konfiguriert ist, in der sie den zweiten Endabschnitt (13) nicht abdeckt.

6. Vorrichtung (1) nach Anspruch 4 oder 5, wobei die Stützschale (9) Federelemente (36, 37) umfasst, die zum Vorspannen der Schiebevorrichtung (14) in einer Richtung zu dem zweiten Endabschnitt (13) hin konfiguriert sind.

7. Vorrichtung (1) nach einem der vorstehenden Ansprüche, wobei die Vorrichtung (1) einen Behälter (2) umfasst, der mit einem Deckel (3) verschlossen werden kann und wobei die Druckeinheit (4) einen Bediengriff (6) umfasst, der außerhalb des geschlossenen Behälters (2) positioniert ist, und eine Rakel (5) umfasst, die innerhalb des geschlossenen Behälters (2) positioniert ist.

8. Vorrichtung (1) nach Anspruch 7, wobei der Behälter (2) einen Luftventilator (20) zum Verdrängen von Luft in Richtung der Vorrichtung (10), während die Schutzschicht (17) aufgetragen wird, umfasst.

9. Vorrichtung (1) nach Anspruch 8, wobei der Behälter (2) einen Luftfilter umfasst, der mit dem Luftgebläse (20) zusammenwirkt.

10. Vorrichtung (1) nach einem der vorstehenden Ansprüche, wobei die Vorrichtung (10) durch eine mobile Vorrichtung (10) gebildet wird.

11. Vorrichtung (1) gemäß Anspruch 10, wobei die mobile Vorrichtung (10) ein Mobiltelefon, ein Tablet-Computer oder eine ähnliche Einheit ist.

12. Vorrichtung (1) gemäß Anspruch 10 oder 11, wobei die Oberfläche durch einen Bildschirm eines Displays gebildet ist, das Teil der mobilen Vorrichtung (10) ist.

## Revendications

1. Appareil (1) pour appliquer une couche protectrice (17) sur la surface d'un dispositif (10), ledit appareil (1) étant configuré pour accueillir le dispositif (10) et comprenant une unité de pression (4) configurée pour être déplacée le long de ladite surface tout en appliquant de la pression sur ladite couche protectrice (17), dans lequel l'unité de pression (4) est configurée pour être déplacée dans une direction allant d'une première partie d'extrémité (12) à une deuxième partie d'extrémité (13) dudit dispositif (10) lorsque ladite couche protectrice (17) est montée d'une manière à ce qu'elle repose sur une languette de support (19) positionnée au niveau de ladite deuxième partie d'extrémité (13) dudit dispositif (10), et dans lequel ladite languette de support (19) est retirée lorsque ladite unité de pression (4) se rapproche de ladite deuxième partie d'extrémité (13) du dispositif (10) et vient en contact avec un dispositif coulissant (14) qui fait partie dudit appareil (1) et comprend ladite languette de support (19) et qui est configuré pour être déplacé dans une direction le long de l'extension longitudinale du dispositif (10).

2. Appareil (1) selon la revendication 1, dans lequel ledit dispositif coulissant (14) est configuré pour être positionné couvrant au moins partiellement ladite deuxième partie d'extrémité (13) du dispositif avant que l'unité de pression (4) soit actionnée, et dans lequel ledit dispositif coulissant (14) est configuré pour être forcé en direction d'une position dans laquelle ladite languette de support (19) est retirée lorsque l'unité de pression (4) vient en contact avec ledit dispositif coulissant (14).

3. Appareil (1) selon la revendication 1 ou 2, dans lequel ledit dispositif coulissant (14) est forcé à être déplacé dans une direction à l'écart de ladite deuxième partie d'extrémité (13) en conséquence d'un mouvement de l'unité de pression (4) après qu'il a atteint une position dans laquelle il est en contact avec le dispositif coulissant (14), de sorte que la languette de support (19) ne supporte plus le bord du film de protection (17) et que le film de protection (17) est pressé en contact avec la surface dudit dispositif (10).

4. Appareil (1) selon l'une quelconque des revendications 1 à 3, dans lequel ledit dispositif coulissant (14) est configuré pour être déplacé le long d'un plateau de support (9) qui est configuré pour accueillir ledit dispositif (10).

5. Appareil (1) selon la revendication 4, dans lequel ledit plateau de support (9) comprend un élément de verrouillage (33) qui est configuré pour verrouiller de manière amovible le dispositif coulissant (14) dans une position de repos dans laquelle il ne couvre pas ladite deuxième partie d'extrémité (13).

6. Appareil (1) selon la revendication 4 ou 5, dans lequel ledit plateau de support (9) comprend des éléments de ressort (36, 37) qui sont configurés pour solliciter ledit dispositif coulissant (14) dans une direction allant vers ladite deuxième partie d'extrémité (13).

7. Appareil (1) selon l'une quelconque des revendications précédentes, dans lequel l'appareil (1) comprend un contenant (2) qui peut être fermé avec un couvercle (3) et dans lequel l'unité de pression (4) comprend une poignée d'actionnement (6) qui est positionnée à l'extérieur du contenant fermé (2) et une raclette (5) qui est positionnée à l'intérieur du contenant fermé (2).

8. Appareil (1) selon la revendication 7, dans lequel le contenant (2) comprend un ventilateur d'air (20) pour forcer de l'air en direction du dispositif (10) alors que ladite couche protectrice (17) est appliquée.

9. Appareil (1) selon la revendication 8, dans lequel le contenant (2) comprend un filtre à air coopérant avec ledit ventilateur d'air (20).

10. Appareil (1) selon l'une quelconque des revendications précédentes, dans lequel ledit dispositif (10) est constitué d'un dispositif mobile (10).

11. Appareil (1) selon la revendication 10, dans lequel ledit dispositif mobile (10) est un téléphone mobile, une tablette ou une unité similaire.

12. Appareil (1) selon la revendication 10 ou 11, dans lequel ladite surface est constituée d'un écran d'un affichage faisant partie dudit dispositif mobile (10).
